# EUROPÄISCHE PATENTSCHRIFT

(11) **EP 2 001 108 B1**
(45) Veröffentlichungstag und Bekanntmachung des Hinweises auf die Patenterteilung: **18.10.2017**
(21) Anmeldenummer: 08104211.1
(22) Anmeldetag: 02.06.2008
(51) Int. Cl.: H02K 15/00, B21F 11/00, B26D 1/38

(54) **Verfahren und Vorrichtung zur Herstellung eines bewickelten Bauteils**
Method and apparatus for manufacturing a coiled component
Procédé et machine de fabrication d'un composant enroulé

(30) Priorität: 04.06.2007 DE 102007025968
(43) Veröffentlichungstag der Anmeldung: 10.12.2008
(73) Patentinhaber: Robert Bosch GmbH, 70442 Stuttgart (DE)
(72) Erfinder: Schmidt, Ralf, 77871 Renchen (DE); Huber, Michael, 77836 Rheinmuenster (DE); Hauser, Peter, 77833 Ottersweier (DE); Meier, Manfred, 77830 Buehlertal (DE); Sukhman, Maxim, 76534 Baden-Baden (DE)

(56) Entgegenhaltungen:
- FR-A- 2 032 888
- US-A- 4 412 466

## Beschreibung

### Stand der Technik

Die vorliegende Erfindung betrifft ein Verfahren zur Herstellung eines bewickelten Bauteils, wie beispielsweise einen mit einem Wickeldraht bewickelten Anker für eine elektrische Maschine. Ferner betrifft die vorliegende Erfindung ein System umfassend eine Vorrichtung zum Bewickeln eines Bauteils mit einem Wickeldraht.

Verfahren zur Herstellung eines bewickelten Bauteils sind aus dem Stand der Technik in unterschiedlichen Ausgestaltungen bekannt. Zum Aufwickeln einer elektrischen Wicklung aus einem Wickeldraht wird beispielsweise ein Wickeldraht aus einer Düse, deren Position veränderbar ist, auf ein rotierendes Bauteil aufgewickelt. Alternativ kann auch die Düse um das zu bewickelnde Bauteil rotiert werden. Nach Beendigung des Wickelvorgangs wird der Wickeldraht mittels eines Trennschneiders, welcher einem Seitenschneider entspricht, abgetrennt. Bedingt durch die Baugröße des Trennschneiders kommen die Schneidkanten jedoch nicht nahe genug an eine Kontaktstelle am bewickelten Bauteil heran, so dass lange Drahtenden vom Bauteil vorstehen. Hierbei kann insbesondere keine definierte Länge des vorstehenden Drahtes sichergestellt werden. Ferner ergeben sich bei Verwendung des Trennschneiders auch lange freie Drahtenden an der Düse, wodurch beim Ansetzen des Wickeldrahts an einem nächsten zu bewickelnden Bauteil ebenfalls lange Drahtenden am Wickeldrahtanfang vorliegen. Weiterhin haben die Undefinierten langen Drahtenden negative Einflüsse auf die Prozesssicherheit des Wickel- und Kontaktierprozesses. Weiterhin ist das Rüsten der Trennschneider aufwendig.

In der gattungsgemäßen FR 2 032 88 A sind teilweise Merkmale der unabhängigen Ansprüche der vorliegenden Erfindung gezeigt.

### Vorteile der Erfindung

Das erfindungsgemäße Verfahren zur Herstellung eines Bauteils mit einer Wicklung aus einem Wickeldraht mit den Merkmalen des Patentanspruchs 1 weist demgegenüber den Vorteil auf, dass der Wickeldraht sehr kurz am Bauteil abgetrennt werden kann. Hierdurch wird insbesondere die Gefahr eines elektrischen Kontaktes zu einem benachbarten Bauteil reduziert. Das erfindungsgemäße Verfahren steigert signifikant die Prozesssicherheit des Kontaktierprozesses am Wickeldrahtende, da erfindungsgemäß kurze Drahtenden mit definierter Länge erreicht werden. Ferner hat bei Verwendung einer Düse zum Wickeln auch ein aus der Düse überstehendes Drahtende ebenfalls eine definierte und kurze Länge. Hierdurch ist ein Anlegen bzw. Einhaken des Wickeldrahtendes zu Beginn eines neuen Wickelprozesses deutlich vereinfacht. Dies wird erfindungsgemäß dadurch erreicht, dass der Wickeldraht nach dem Ende des Wickelvorgangs mittels eines Drehschneiders abgetrennt wird. Der Drehschneider umfasst dabei einen Außenzylinder und einen Innenzylinder, wobei im Außenzylinder ein erster Fensterbereich und im Innenzylinder ein zweiter Fensterbereich vorgesehen sind. Der Drehschneider 1 wird nach unten geführt, sodass das Bauteil in dem Drehschneider angeordnet wird, wobei der erste Fensterbereich und der zweite Fensterbereich derart einander überlappend angeordnet werden, sodass der noch nicht abgetrennte Wickeldraht durch die beiden Fensterbereiche verläuft. Der Wickeldraht wird von oben mit einem Halter gedrückt. Dadurch wird die Position des Wickeldrahts fixiert, wobei der Halter im Inneren des Innenzylinders (3) angeordnet ist.
Der Wickeldraht wird zum Trennen durch den ersten und zweiten Fensterbereich hindurchgeführt bzw. der Drehschneider senkt sich von oben über den Draht. Das Trennen erfolgt mittels einer Relativrotation zwischen dem Innen- und Außenzylinder. Dadurch wird der Draht an den Kanten der Fensterbereiche abgeschert. Die Verwendung der Zylinder, welche sehr dünnwandig ausgebildet werden können, ermöglicht dabei ein kurzes und definiertes Trennen des Wickeldrahts.

Die Unteransprüche zeigen bevorzugte Weiterbildungen der Erfindung.

Vorzugsweise ist entweder der Innenzylinder oder der Außenzylinder ortsfest. Somit erfolgt ein Trennen des Wickeldrahts durch Drehen des nicht ortsfesten Zylinders. Mit anderen Worten, wenn der Innenzylinder ortsfest ist, wird durch Drehen des Außenzylinders der in die ersten und zweiten Fensterbereiche eingelegte Wickeldraht getrennt. Wenn der Außenzylinder ortsfest ist, wird durch Drehen des Innenzylinders der Wickeldraht getrennt.

Gemäß einer weiteren bevorzugten Ausgestaltung der vorliegenden Erfindung sind sowohl der Innenzylinder als auch der Außenzylinder drehbar. Dadurch kann durch Drehen der beiden Zylinder in entgegengesetzte Richtungen ein Trennen des in die Fensterbereiche eingelegten Wickeldrahts erfolgen.

Gemäß einer weiteren bevorzugten alternativen Ausgestaltung der vorliegenden Erfindung wird der Wickeldraht mittels eines separaten Klemmelements, z.B. einer weiteren Hülse o.Ä. gehalten.

Für einen besonders einfachen Prozessablauf wird der Drehschneider vorzugsweise pneumatisch betätigt. Hierdurch kann eine sichere und kostengünstige Betätigung des Drehschneiders ermöglicht werden.

Gemäß einer weiteren bevorzugten Ausgestaltung der vorliegenden Erfindung ist eine Dicke des Innenzylinders gleich einer Dicke des Außenzylinders des Drehschneiders. Dadurch kann bei Wahl einer geringen Wandstärke ein besonders kompakter Drehschneider in Radialrichtung des Drehschneiders erhalten werden, so dass der Wickeldraht sehr kurz abgetrennt werden kann.

Weiter betrifft die vorliegende Erfindung eine Vorrichtung zum Bewickeln eines Bauteils mit einem Wickeldraht, wobei die Vorrichtung zum Trennen des Wickeldrahts einen Drehschneider umfasst. Der Drehschneider weist einen Außenzylinder mit einem ersten Fensterbereich und einen Innenzylinder mit einem zweiten Fensterbereich auf. Zwischen dem Innenzylinder und dem Außenzylinder ist eine Relativrotation möglich, um einen in den beiden Fensterbereichen angeordneten Wickeldraht abzutrennen.

Vorzugsweise ist eine Breite der ersten und zweiten Fensterbereiche etwas größer als ein Durchmesser des Wickeldrahts. Dadurch kann ein sicheres Trennen des Wickeldrahts ermöglicht werden, wobei eine Länge einer Relativrotation zwischen den beiden Zylindern ungefähr dem Durchmesser des Drahtes entspricht. Alternativ können die Fensterbereiche auch deutlich größer als ein Drahtdurchmesser gewählt werden, um den Drehschneider auch für unterschiedlich dicke Wickeldrähte verwenden zu können.

### Zeichnung

Nachfolgend wird ein bevorzugtes Ausführungsbeispiel der Erfindung unter Bezugnahme auf die begleitende Zeichnung im Detail beschrieben. In der Zeichnung zeigt:
- Figur 1: eine schematische Ansicht eines Teilbereichs einer Wickelmaschine mit einem Drehschneider gemäß der vorliegenden Erfindung im Längsschnitt,
- Figur 2: eine schematische Querschnittsansicht entlang der Linie II-II von Figur 1, und
- Figur 3: eine Seitenansicht der in den Figuren 1 und 2 gezeigten Wickelmaschine.

### Bevorzugte Ausführungsformen der Erfindung

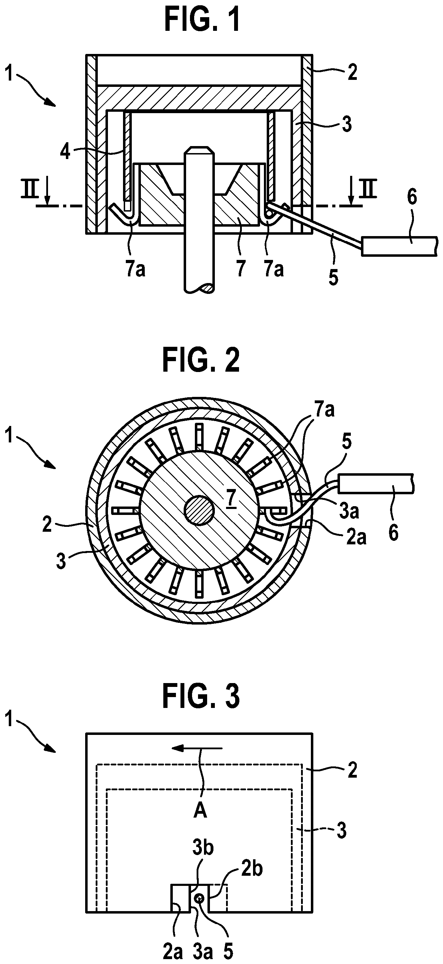

Nachfolgend wird unter Bezugnahme auf die Figuren 1 bis 3 eine Wickelmaschine mit einem Drehschneider 1 gemäß der vorliegenden Erfindung im Detail beschrieben.

Wie aus Figur 1 ersichtlich ist, umfasst die Wickelmaschine einen Drehschneider 1 mit einem Außenzylinder 2 und einem Innenzylinder 3. Wie aus Figur 1 ersichtlich ist, ist der Innenzylinder 3 im Wesentlichen topfförmig ausgebildet und an seinem Außenumfang ist unmittelbar der Außenzylinder 2 angeordnet. Der Innenzylinder 3 und der Außenzylinder 2 sind dabei relativ zueinander verdrehbar, wobei in diesem Ausführungsbeispiel nur der Außenzylinder 2 verdrehbar sein soll und der Innenzylinder 3 ortsfest ist. Die Wickelmaschine umfasst ferner einen Halter 4, welcher im Inneren des Innenzylinders 3 angeordnet ist. Der Halter 4 ist im Wesentlichen eine Hülse. Der Innenzylinder 3 und der Außenzylinder 2 weisen dabei die gleichen Wandstärken auf. Das Bezugszeichen 7 bezeichnet ein Bauteil, welches mit einem Wickeldraht 5 bewickelt werden soll. In diesem Ausführungsbeispiel ist das Bauteil ein Rotor einer elektrischen Maschine. Der Wickeldraht 5 wird aus einer Düse 6 zugeführt. Damit ist ein Bewickeln des Bauteils 7 in der sogenannten Nadelwickeltechnik möglich. Am Bauteil 7 sind zusätzlich Wickelhaken 7a vorgesehen, welche entlang des gesamten Umfangs des Bauteils 7 angeordnet sind (vgl. Figur 2).

Ferner ist im Außenzylinder 2 ein erster Fensterbereich 2a gebildet und im Innenzylinder 3 ist ein zweiter Fensterbereich 3a gebildet. Die Fensterbereiche 2a und 3a sind dabei gleich groß und befinden sich an einem freien Ende des Außenzylinders 2 und des Innenzylinders 3 (vgl. Figur 3). Die am Kontaktbereich zwischen Außenzylinder 2 und Innenzylinder 3 liegenden Kanten des ersten Fensterbereichs 2a und des zweiten Fensterbereichs 3a sind dabei als Schneiden ausgebildet.

Wenn nun das Bauteil 7 vollständig mit dem Wickeldraht 5 bewickelt ist, erfolgt als letzter Herstellungsschritt ein Trennen des Wickeldrahts vom bewickelten Bauteil. Hierzu wird erfindungsgemäß der Drehschneider 1 nach unten gerührt, wobei der erste Fensterbereich 2a und der zweite Fensterbereich 3a derart einander überlappend angeordnet sind, dass der noch nicht abgetrennte Wickeldraht 5 durch die beiden Fensterbereiche 2a, 3a verläuft. Der Halter 4 wird dabei von oben gegen den Wickeldraht 5 gedrückt, um eine Position des Wickeldrahts 5 zu fixieren. Dieser Zustand ist in Figur 1 dargestellt. Figur 2 zeigt dabei den gleichen Zustand entlang der Schnittlinie II-II wie in Figur 1.

Wenn nun der Wickeldraht 5 vom Bauteil 7 abgetrennt werden soll, wird eine Relativrotation zwischen dem Außenzylinder 2 und dem Innenzylinder 3 ausgeführt. In diesem Ausführungsbeispiel ist der Innenzylinder 3 ortsfest und der Außenzylinder 2 wird, wie durch den Pfeil A in Figur 3 angedeutet, relativ zum Innenzylinder 3 gedreht. Dadurch wird, wie in Figur 3 gezeigt, der Wickeldraht 5 zwischen einer Schneide 2b des ersten Fensterbereichs 2a und einer Schneide 3b des zweiten Fensterbereichs 3a abgeschert. Die Rotation des Außenzylinders 3 wird dabei durch Pneumatik realisiert. Somit wird der Wickeldraht, wie insbesondere aus Figur 1 und 2 ersichtlich, nahe am Bauteil 7 abgeschert. Dadurch wird sichergestellt, dass ein kurzes Drahtende des Wickeldrahts vom Bauteil 7 vorsteht. Hierdurch kann einerseits in einem nächsten Schritt eine sichere Kontaktierung des Bauteils 7 gewährleistet werden und der vorstehende abgetrennte Wickeldraht am Bauteil 7 weist eine definierte Länge auf. Hierdurch kann insbesondere eine Prozesssicherheit des Abtrennens erhöht werden. Darüber hinaus stellt der Drehschneider 1 sicher, dass auch an der Düse 6 eine definierte Drahtlänge vorsteht, so dass bei einem Anlegen des Wickeldrahts an einem neu zu bewickelnden Bauteil ein einfacher Anhakprozess an einem Wickelhaken 7a möglich ist.

## Patentansprüche

1. Verfahren zur Herstellung eines Bauteils (7) mit einer Wicklung aus einem Wickeldraht (5), umfassend die Schritte:
- Wickeln des Wickeldrahts (5) an das Bauteil (7), und
- Trennen des Wickeldrahts (5) vom gewickelten Bauteil mittels eines Drehschneiders (1), wobei der Drehschneider (1) einen Außenzylinder (2) mit einem ersten Fensterbereich (2a) und einen Innenzylinder (3) mit einem zweiten Fensterbereich (3a) umfasst und der Wickeldraht (5) zum Trennen im ersten und zweiten Fensterbereich (2a, 3a) angeordnet wird und das Trennen mittels einer Relativrotation zwischen dem Außenzylinder (2) und dem Innenzylinder (3) erfolgt,
**dadurch gekennzeichnet, dass** zwischen den Schritten des Wickelns und des Trennens, die folgenden zusätzlichen Schritte durchgeführt werden:
- nach-unten-Führen des Drehschneiders (1), sodass das Bauteil in dem Drehschneider angeordnet wird, wobei der erste Fensterbereich (2a) und der zweite Fensterbereich (3a) derart einander überlappend angeordnet werden, dass der noch nicht abgetrennte Wickeldraht (5) durch die beiden Fensterbereiche (2a, 3a) verläuft,
- Drücken des Wickeldrahts von oben mit einem Halter (4), um die Position des Wickeldrahts zu fixieren, wobei der Halter im Inneren des Innenzylinders (3) angeordnet ist.

2. Verfahren nach Anspruch 1, **dadurch gekennzeichnet, dass** der Innenzylinder (2) oder der Außenzylinder (3) ortsfest angeordnet ist und der jeweils andere Zylinder drehbar ist.

3. Verfahren nach Anspruch 1, **dadurch gekennzeichnet, dass** der Außenzylinder (2) und der Innenzylinder (3) jeweils drehbar sind.

4. Verfahren nach Anspruch 1, **dadurch gekennzeichnet, dass** der Wickeldraht (5) mittels eines separaten Klemmelements (4) gehalten wird.

5. Verfahren nach einem der vorhergehenden Ansprüche, **dadurch gekennzeichnet, dass** der Drehschneider (1) pneumatisch betätigt wird.

6. Verfahren nach Anspruch 2, **dadurch gekennzeichnet, dass** der abzutrennende Wickeldraht (5) mittels des ortsfest gehaltenen Zylinders der Innen- und Außenzylinder gehalten wird.

7. System umfassend eine Vorrichtung zur Herstellung eines Bauteils mit einer Wicklung aus einem Wickeldraht (5), sowie ein Bauteil (7) mit dem Wickeldraht (5), ferner aufweisend einen Drehschneider (1), wobei der Drehschneider einen Außenzylinder (2) mit einem ersten Fensterbereich (2a) und einen Innenzylinder (3) mit einem zweiten Fensterbereich (3a) umfasst, um einen in den ersten und zweiten Fensterbereichen (2a, 3a) angeordneten Wickeldraht (5) vom bewickelten Bauteil abzutrennen, wobei der Außenzylinder (2) und der Innenzylinder (3) derart angeordnet sind, dass der Innenzylinder und der Außenzylinder relativ zueinander drehbar sind,
**dadurch gekennzeichnet, dass** im Inneren des Innenzylinders (3) ein Halter (4) angeordnet ist, wodurch der Wickeldraht von oben drückbar ist, sodass der Wickeldraht fixierbar ist, wobei der Drehschneider (1) nach unten führbar ist, sodass das Bauteil in dem Drehschneider angeordnet wird, wobei ferner der erste Fensterbereich (2a) und der zweite Fensterbereich (3a) derart einander überlappend anordenbar sind, dass der noch nicht abgetrennte Wickeldraht (5) durch die beiden Fensterbereiche (2a, 3a) verläuft.

8. System nach Anspruch 8, **dadurch gekennzeichnet, dass** eine Breite des ersten Fensterbereichs (2a) und des zweiten Fensterbereichs (2b) etwas größer als ein Durchmesser des Wickeldrahts (5) sind.

9. System nach Anspruch 8 oder 9, **dadurch gekennzeichnet, dass** eine Wandstärke des Außenzylinders (2) gleich einer Wandstärke des Innenzylinders (3) ist.

## Claims

1. Method for producing a component (7) with a winding comprising a winding wire (5), comprising the steps:
- winding of the winding wire (5) onto the component (7), and
- severing of the winding wire (5) from the wound component by means of a rotary cutter (1), the rotary cutter (1) comprising an outer cylinder (2) with a first window region (2a) and an inner cylinder (3) with a second window region (3a), and the winding wire (5) for severing being arranged in the first and second window region (2a, 3a), and the severing taking place by means of a relative rotation between the outer cylinder (2) and the inner cylinder (3),
**characterized in that** the following additional steps are carried out between the steps of winding and severing:
- guiding the rotary cutter (1) downwards, with the result that the component is arranged in the rotary cutter, the first window region (2a) and the second window region (3a) being arranged so as to overlap one another in such a way that the winding wire (5) which has not yet been severed runs through the two window regions (2a, 3a),
- pressing of the winding wire from above with a holder (4), in order to fix the position of the winding wire, the holder being arranged in the interior of the inner cylinder (3).

2. Method according to Claim 1, **characterized in that** the inner cylinder (2) or the outer cylinder (3) is arranged in a stationary manner, and the respective other cylinder is rotatable.

3. Method according to Claim 1, **characterized in that** the outer cylinder (2) and the inner cylinder (3) are in each case rotatable.

4. Method according to Claim 1, **characterized in that** the winding wire (5) is held by means of a separate clamping element (4).

5. Method according to one of the preceding claims, **characterized in that** the rotary cutter (1) is actuated pneumatically.

6. Method according to Claim 2, **characterized in that** the winding wire (5) to be severed is held by means of that cylinder of the inner and outer cylinders which is held in a stationary manner.

7. System comprising an apparatus for producing a component with a winding comprising a winding wire (5), and a component (7) with the winding wire (5), having, furthermore, a rotary cutter (1), the rotary cutter comprising an outer cylinder (2) with a first window region (2a) and an inner cylinder (3) with a second window region (3a), in order to sever a winding wire (5) which is arranged in the first and second window regions (2a, 3a) from the wound component, the outer cylinder (2) and the inner cylinder (3) being arranged in such a way that the inner cylinder and the outer cylinder are rotatable relative to one another, **characterized in that** a holder (4) is arranged in the interior of the inner cylinder (3), by way of which holder (4) the winding wire can be pressed from above, with the result that the winding wire can be fixed, it being possible for the rotary cutter (1) to be guided downwards, with the result that the component is arranged in the rotary cutter, it being possible, furthermore, for the first window region (2a) and the second window region (3a) to be arranged so as to overlap one another in such a way that the winding wire (5) which has not yet been severed runs through the two window regions (2a, 3a).

8. System according to Claim 7, **characterized in that** a width of the first window region (2a) and of the second window region (2b) are somewhat greater than a diameter of the winding wire (5).

9. System according to Claim 7 or 8, **characterized in that** a wall thickness of the outer cylinder (2) is equal to a wall thickness of the inner cylinder (3).

## Revendications

1. Procédé de fabrication d'un composant (7) avec un bobinage réalisé à partir d'un fil de bobinage (5) ; comprenant les étapes suivantes :
- enroulement du fil de bobinage (5) au composant (7) ; et
- coupe du fil de bobinage (5) du composant enroulé à l'aide d'une lame tournante (1), la lame tournante (1) comprenant un cylindre extérieur (2) avec une première zone de fenêtre (2a) et un cylindre intérieur (3) avec une deuxième zone de fenêtre (3a) et le fil de bobinage (5) étant disposé pour être coupé dans la première et deuxième zone de fenêtre (2a, 3a) et la coupe s'effectuant au moyen d'une rotation relative entre le cylindre extérieur (2) et le cylindre intérieur (3) ;
**caractérisé en ce qu'**entre les étapes d'enroulement et de coupe, les étapes supplémentaires suivantes sont réalisées :
- introduction vers le bas de la lame tournante (1), de sorte que le composant soit disposé dans la lame tournante, la première zone de fenêtre (2a) et la deuxième zone de fenêtre (3a) étant disposées de telle sorte de façon à se chevaucher l'une l'autre que le fil de bobinage (5) non encore coupé s'étende à travers les deux zones de fenêtre (2a, 3a) ;
- compression du fil de bobinage par en haut avec un support (4), pour fixer la position du fil de bobinage, le support étant disposé à l'intérieur du cylindre intérieur (3).

2. Procédé selon la revendication 1, **caractérisé en ce que** le cylindre intérieur (2) ou le cylindre extérieur (3) est disposé de façon fixe sur place et que l'autre cylindre respectivement peut tourner.

3. Procédé selon la revendication 1, **caractérisé en ce que** le cylindre extérieur (2) et le cylindre intérieur (3) peuvent respectivement tourner.

4. Procédé selon la revendication 1, **caractérisé en ce que** le fil de bobinage (5) est maintenu à l'aide d'un élément de serrage (4) séparé.

5. Procédé selon l'une quelconque des revendications précédentes, **caractérisé en ce que** la lame tournante (1) est actionnée de façon pneumatique.

6. Procédé selon la revendication 2, **caractérisé en ce que** le fil de bobinage (5) à couper est maintenu à l'aide du cylindre maintenu fixement sur place parmi les cylindres intérieur et cylindre extérieur.

7. Système comprenant un dispositif de fabrication d'un composant avec un bobinage composé d'un fil de bobinage (5), ainsi qu'un composant (7) avec le fil de bobinage (5), comportant en outre une lame tournante (1), la lame tournante comprenant un cylindre extérieur (2) avec une première zone de fenêtre (2a) et un cylindre intérieur (3) avec une deuxième zone de fenêtre (3a), pour couper un fil de bobinage (5) disposé dans les première et deuxième zones de fenêtre (2a, 3a) du composant enroulé, le cylindre extérieur (2) et le cylindre intérieur (3) étant disposés de telle sorte que le cylindre intérieur et le cylindre extérieur puissent pivoter l'un par rapport à l'autre, **caractérisé en ce qu'**un support (4) est disposé à l'intérieur du cylindre intérieur (3), permettant de comprimer le fil de bobinage par en haut, de sorte que le fil de bobinage puisse être fixé, la lame tournante (1) pouvant être guidée vers le bas, de sorte que le composant soit disposé dans la lame tournante, la première zone de fenêtre (2a) et la deuxième zone de fenêtre (3a) étant en outre agencées de telle sorte de façon à se chevaucher l'une l'autre que le fil de bobinage (5) pas encore coupé s'étende à travers les deux zones de fenêtre (2a, 2b).

8. Système selon la revendication 7, **caractérisé en ce qu'**une largeur de la première zone de fenêtre (2a) et de la deuxième zone de fenêtre (2b) est un peu plus grande qu'un diamètre du fil de bobinage (5).

9. Système selon la revendication 7 ou 8, **caractérisé en ce qu'**une épaisseur de paroi du cylindre extérieur (2) est égale à une épaisseur de paroi du cylindre intérieur (3).
